# EUROPEAN PATENT APPLICATION

(11) **EP 4 738 859 A1**
(43) Date of publication of application: **06.05.2026**
(21) Application number: 24209692.3
(22) Date of filing: 30.10.2024
(51) Int. Cl.: H04N 23/56, H04N 23/65, H04N 23/74

(54) **IMAGE-CAPTURING SYSTEM WITH CURRENT-CONTROLLED ILLUMINATION**

(71) Applicant: Axis AB, 223 69 Lund (SE)
(72) Inventor: Grawé, Markus, 223 69 Lund (SE)
(74) Representative: AWA Sweden AB

(57) **Abstract**

The present disclosure relates to an image-capturing system (100) comprising: an image sensor (101) configured to capture images of a scene at a periodic rate; an illumination source (102) for illuminating the scene; measurement and control circuitry (108) configured to: continuously measure a current (200) to/from the image sensor (101); continuously detect periodically alternating high and low levels (202; 203) of the measured current (200); and control the illumination source (102) to alternate between an on state and an off state with an illumination frequency equal to a switching frequency of the detected periodically alternating high and low levels (202; 203) of the measured current (200) such that the illumination source (102) is in the on state during exposure of the image sensor (101). The disclosure further relates to a method (300) of controlling an illumination source for illuminating a scene during image sensor exposures.

## Description

The present disclosure relates to an image-capturing system with current-controlled illumination, specifically designed to optimize power consumption by synchronizing the illumination with the exposure time of the image sensor. The disclosure further relates to a method of controlling an illumination source, such as an infrared light-emitting diode (LED), for illuminating a scene during the exposure periods of the image sensor, even in systems where the image sensor lacks a dedicated exposure signal output.

### Background

In modern network camera systems, infrared (IR) illumination plays a critical role in capturing clear images in low-light conditions. Typically, these systems rely on IR light-emitting diodes (LEDs) to illuminate the scene, ensuring that the image sensor can capture detailed images even in darkness. In the current state of the art, IR LEDs are often continuously powered, regardless of whether the image sensor is actively capturing an image. This approach, while ensuring that sufficient illumination is available when needed, leads to significant power consumption.

A common practice to reduce power consumption is to synchronize the IR illumination with the exposure time of the image sensor. In systems where the image sensor provides a dedicated output signal indicating the exposure period, this synchronization can be effectively implemented. However, not all image sensors are equipped with such an output signal, making it challenging to control the IR illumination.

The disadvantage of the existing solutions is twofold. First, in systems lacking an exposure signal from the image sensor, there is no straightforward method to accurately time the IR illumination with the sensor's exposure period. This results in continuous or excessively long periods of IR LED operation, leading to increased power consumption and reduced operational efficiency. Second, even in systems where some form of synchronization is possible, the reliance on external signals or complex configurations can complicate the design and increase costs.

It is therefore an objective of the present disclosure to provide a solution that enables precise control of IR illumination in network camera systems, particularly in those where the image sensor does not provide a direct signal indicating the exposure time.

This solution aims to optimize power consumption by ensuring that the IR LEDs are active when needed, thus improving the energy efficiency of the camera system without requiring additional signaling from the sensor.

### Summary

The present disclosure relates to an image-capturing system comprising an image sensor configured to capture images of a scene at a periodic rate, an illumination source for illuminating the scene, and measurement and control circuitry configured to continuously measure a current to or from the image sensor, continuously detect periodically alternating high and low levels of the measured current, and control the illumination source to alternate between an on state and an off state with an illumination frequency equal to a switching frequency of the detected periodically alternating high and low levels of the measured current such that the illumination source is in the on state during exposure of the image sensor.

This system enables precise synchronization of the illumination source with the exposure time of the image sensor, thereby optimizing energy consumption in network camera systems. By monitoring the current flowing to or from the image sensor, the system can detect patterns in the current that correlate with the sensor's exposure periods. This allows the illumination source to be activated only during the times when the image sensor is actively capturing images, reducing unnecessary power usage. This is particularly beneficial in systems where the image sensor does not provide a direct signal indicating its exposure time, as the invention leverages the detected current fluctuations to infer the appropriate timing for the illumination.

The inventor has realized that there exists a correlation between the switching frequency of the periodically alternating high and low levels of the current and an exposure frequency, and that this correlation can be used to control the illumination source. This has enabled a method of controlling the illumination source without requiring a direct signal from the image sensor indicating when it is actively exposing, but instead using an illumination frequency that is equal to the switching frequency of the detected periodically alternating high and low levels. The inventor has observed that the image sensor draws varying amounts of current during its operational cycle, with distinct peaks and troughs that correspond to different phases of the sensor's operation. Specifically, during the exposure phase, when the sensor is capturing image data, there is a notable increase in current draw. This higher current level is followed by a reduction during idle or non-exposure periods. These alternating high and low current levels repeat at a frequency that matches the periodic exposure rate of the image sensor. This correlation between current draw and exposure frequency allows the system to indirectly determine the exposure periods of the sensor by continuously monitoring the sensor's current. This realization provides an advantage, particularly in systems where the image sensor and control circuitry are disposed on separate units or where access to internal exposure signals is limited or not feasible.

In some configurations of image-capturing systems, the different parts are located in different units, such as on separate printed circuit boards. There may be different reasons for that. For example, separate components or sub-systems may be purchased and operate as independent systems. The system may also be disposed in this way for design flexibility and modularity reasons, signal integrity reasons or even thermal management reasons. In such systems, adding further communication channels for synchronizing the image sensor and the illumination source would add cost and complexity. By continuously measuring the current to/from the image sensor and control the illumination source to alternate between an on state and an off state with an illumination frequency equal to a switching frequency of the detected periodically alternating high and low levels of the measured current, a system is obtained in which the illumination is efficiently synchronized with the exposure time of the image sensor.

The current peaks are not necessarily equal to the exposure of the image sensor for all configurations. The current peak may, for example, be related to the readout of the image sensor. For this reason, the enable signal for controlling the illumination source to illuminate and not illuminate the scene may be shifted or may include a time offset to match the reoccurring exposure of the image sensor.

The disclosed method similarly focuses on controlling an illumination source for illuminating a scene during image sensor exposures. The method includes configuring an image sensor to capture images at a periodic rate, continuously measuring the current associated with the sensor, detecting the periodic high and low levels of this current, and controlling the illumination source to match the switching frequency of these levels. The method ensures that the illumination is active only during the sensor's exposure period, thus improving the overall energy efficiency of the system.

This approach provides a significant technical advantage by eliminating the need for additional exposure timing signals or complex synchronization mechanisms between the sensor and the illumination source. The system and method can be implemented with a wide range of image sensors, including those lacking built-in exposure signaling capabilities, thereby offering a flexible and cost-effective solution for various imaging applications. Furthermore, by reducing the operational time of the illumination source to only when necessary, the invention also contributes to extending the lifespan of the illumination components, which can be particularly advantageous in systems where maintenance and component replacement are challenging or costly.

A person skilled in the art will recognize that the presently disclosed method of controlling an illumination source for illuminating a scene during image sensor exposures may be performed using any embodiment of the presently image-capturing system, and vice versa.

### Description of drawings

Various embodiments are described hereinafter with reference to the drawings. The drawings are examples of embodiments and are intended to illustrate some of the features of the presently disclosed image-capturing system and method of controlling an illumination source for illuminating a scene during image sensor exposures, and are not limiting to the presently disclosed system and method.
Fig. 1 shows a schematic view of an embodiment of the presently disclosed image-capturing system.
Fig. 2 shows an example of an implementation of measurement and control circuitry measuring a current to/from the image sensor and controlling the illumination source.
Fig. 3 shows an example of current drawn by the image sensor and two examples of enable signals for controlling the illumination source.
Fig. 4 shows a flow chart of a method according to an embodiment of the presently disclosed method of controlling an illumination source for illuminating a scene during image sensor exposures.

### Detailed description

The present disclosure relates to an image-capturing system. The image-capturing system comprises an image sensor configured to capture images of a scene at a periodic rate, and an illumination source for illuminating the scene. The images captured by the image-capturing system may form a video sequence

The image-capturing system may use any suitable type of image sensor. Image sensors can be broadly categorized into different types, the most common being Charge-Coupled Devices (CCD) and Complementary Metal-Oxide-Semiconductor (CMOS) sensors. CCD sensors operate by transferring charge from each pixel sequentially to a readout node, where the signal is amplified and converted into a digital value. CMOS sensors integrate both the pixel array and the readout electronics onto the same chip, allowing each pixel to be read independently. Both CCD and CMOS sensors may be used in the presently disclosed image-capturing system, depending on the application requirements.

The image-capturing system further comprises a measurement and control circuitry configured to continuously measure a current to or from the image sensor. Preferably, the measurement and control circuitry is further configured to continuously detect periodically alternating high and low levels of the measured current. Based on the detected periodically alternating high and low levels of the measured current, the measurement and control circuitry can control the illumination source to alternate between an on state and an off state with an illumination frequency equal to a switching frequency of the detected periodically alternating high and low levels of the measured current. In this way the illumination source can be controlled to be in the on state during exposure of the image sensor.

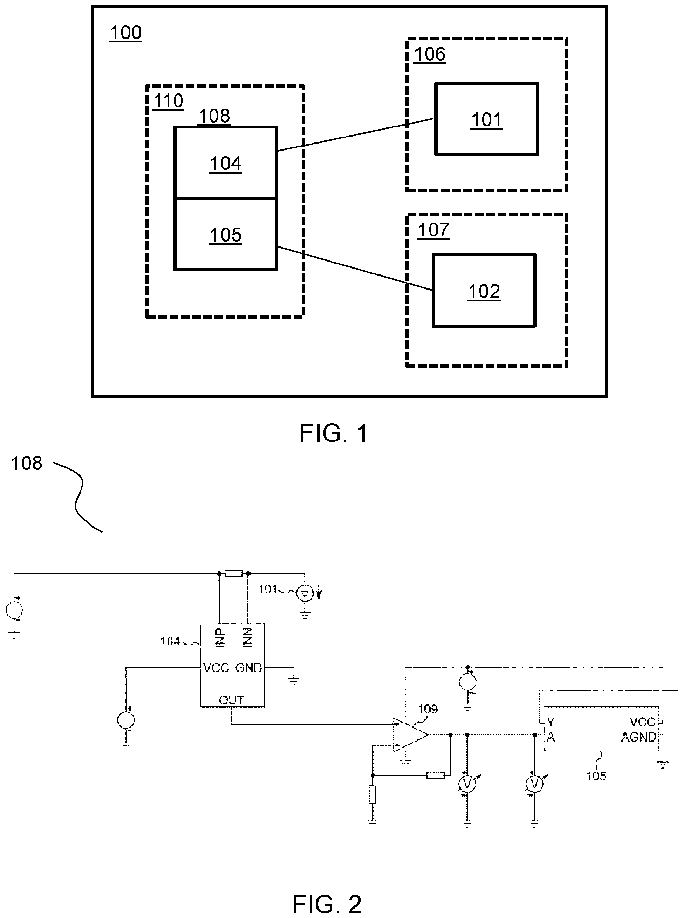

Fig. 1 shows a schematic view of an embodiment of the presently disclosed image-capturing system 100. In this example there are three separate units 106, 107 and 110, typically printed circuit boards, for the image sensor 101, the illumination source 102 and the measurement and control circuitry 108, respectively. The measurement and control circuitry 108 comprises measurement circuitry 104, such as at least one shunt resistor, for measuring the current, and control circuitry 105, such as a comparator, for generating an enable signal for controlling the illumination source to illuminate and not illuminate the scene.

Fig. 2 shows an example of an implementation of measurement and control circuitry 108 measuring a current to/from the image sensor 101 and controlling the illumination source. As can be seen in the figure, there is a current to the image sensor 101. The voltage over a current-sense resistor is measured by the measurement circuitry 104, which is implemented as a current sense amplifier. A person skilled in the art would understand that measuring a current can be done indirectly by measuring a voltage. The term `measuring a current' shall be construed broadly to cover any measurement which, directly or indirectly, measures the current. The measured current is then amplified using the amplifier 109. The amplified signal can then be used to further generate an enable signal for controlling the illumination source to illuminate and not illuminate the scene. This can be done by means of a comparator circuit 105, for example, implemented as a Schmitt trigger.

The image sensor and the measurement and control circuitry may be disposed in different units, such as on different printed circuit boards (PCBs). This configuration arises, for example, when the system components, including the image sensor and control circuitry, are procured as separate, pre-built modules. Such systems often integrate components that are designed and manufactured independently, and as a result, there may be limited access to certain internal signals, such as an explicit on/off or exposure signal from the image sensor.

When the image sensor and control circuitry are located on separate PCBs, the control system does not have direct access to an exposure signal that would typically indicate when the sensor is exposing. In systems designed with integrated sensors and control circuitry, this signal is often easily available and used to synchronize the illumination source with the sensor's activity. However, in modular systems where the components are disposed on different units, this signal may not be available or accessible due to the independent nature of the components, making direct synchronization between the illumination source and the image sensor more challenging.

As a result, in such configurations, it may be possible to measure the current flowing to or from the image sensor in order to infer its operational state. By monitoring the current, the system can detect patterns or fluctuations that correlate with the sensor's exposure period, even in the absence of a direct exposure signal. This approach allows for indirect synchronization of the illumination source with the sensor's activity, ensuring that the illumination is activated only when the sensor is capturing an image, despite the separation of the components on different units or PCBs.

In terms of implementation, the connection between the image sensor and the measurement and control circuitry could be established via cable or connectors. This connection can be designed to handle high-speed data transmission and accurate synchronization between the image sensor and the measurement and control circuitry.

Similarly, the image sensor and the illumination source may be disposed in different units, such as on separate printed circuit boards (PCBs) or modules. This setup may occur when the system components, including the image sensor and the illumination source, are purchased or assembled as independent units, rather than as an integrated system. In such cases, the illumination source is not directly coupled with the image sensor's control circuitry, making it difficult to obtain a direct signal from the image sensor to control the illumination.

In one embodiment, the measurement and control circuitry is configured to generate an enable signal for controlling the illumination source to alternate between an on state and an off state. The enable signal is an electrical signal that dictates whether the illumination source is powered on or off, based on the current measured from the image sensor. This setup allows the illumination source to be toggled on only when the image sensor is actively capturing images, which significantly reduces power consumption compared to continuously running the illumination source. The enable signal can be designed to be a digital pulse or a binary signal, depending on the type of illumination source and the requirements of the system.

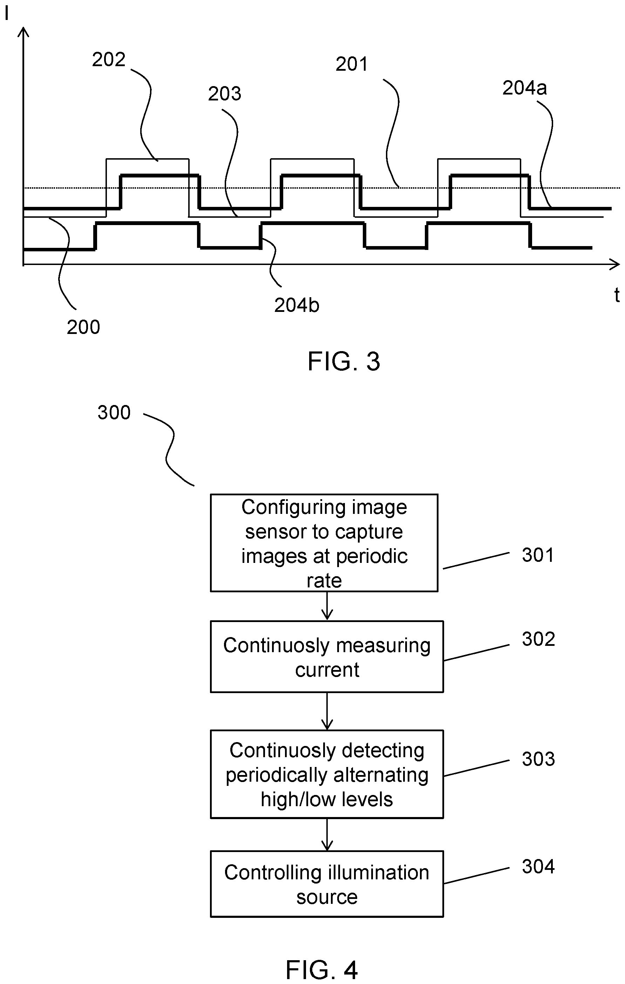

Fig. 3 shows an example of current 200 drawn by the image sensor and two examples of enable signals (204a; 204b) for controlling the illumination source. The current has periodically alternating high 202 and low levels 203. The high levels 202 can be defined as current levels higher than a predefined current threshold 201 and the low levels 203 can be defined as current levels lower than the predefined current threshold 201. The measurement and control circuitry may be configured to compare the measured current against a predefined threshold to determine whether the image sensor is in the active or inactive state. Based on this, the measurement and control circuitry can then generate an enable signal (204a; 204b) for controlling the illumination source to illuminate and not illuminate the scene. These enable signals can be generated in different ways. In fig. 3 there are two examples of enable signals (204a; 204b). Enable signal 204a is slightly delayed in relation to the high levels 202 of the current 200. Enable signal 204b is slightly broader than the high levels 202 of the current 200. For both examples, the current 200 (having periodically alternating high 202 and low levels 203) and the enable signal (204a and 204b, respectively) have the same frequency. The implementation may thus be adapted according to a known or assumed timing relation between the current consumption and the exposure of the image sensor.

The enable signal may be generated based on predefined thresholds that determine when the image sensor is in its active exposure phase. The enable signal could be a binary signal or any other suitable signal. The enable signal could even be a more complex signal and/or a pulse-width modulated (PWM) signal, which would allow finer control over the intensity of the illumination source during the sensor's exposure. In more advanced systems, the enable signal could also be synchronized with other processes, to ensure that the illumination is always optimized for the current imaging conditions.

In one embodiment of the present disclosure, the image-capturing system may be configured to work with multiple image sensors. The principle of detecting the correlation between the current draw and the exposure frequency of the sensor remains applicable even in multi-sensor configurations. When multiple image sensors are employed, each sensor may operate with its own exposure cycle and current draw pattern. In such a case, the system may be modified to either synchronize a single shared illumination source across multiple image sensors or control separate illumination sources for each individual image sensor. The measurement and control circuitry may accordingly measure a current to/from each image sensor or a combined current from all of the image sensors. The frequency of the high and low levels of the measured current may be based on this current. The multiple image sensors may have the same exposure frequency, and the exposure may optionally be shifted in relation to each other.

In one embodiment, the measurement and control circuitry comprises measurement circuitry, such as at least one shunt resistor, for measuring the current to or from the image sensor. A shunt resistor is a low-resistance component that allows for accurate current measurements by generating a voltage drop proportional to the current flowing through it. This voltage drop can then be measured by the control circuitry to monitor the current being drawn by the image sensor. The use of a shunt resistor provides a simple and reliable method for measuring current without significantly affecting the operation of the image sensor or adding substantial cost to the system.

The shunt resistor can be placed in series with the power supply to the image sensor, ensuring that all current flowing into the sensor is measured. The control circuitry, which could include components such as comparators and analog-to-digital converters (ADCs), would monitor the voltage drop across the shunt resistor and use this information to detect changes in the current. In one implementation, the system could be designed to continuously monitor the current in real-time, allowing for immediate adjustments to the illumination source as the image sensor enters or exits its exposure phase.

Alternative current measurement methods could also be employed, depending on the specific requirements of the system. For example, a Hall effect sensor could be used for non-contact current measurement, which might be preferable in systems where space is constrained or where it is not desirable to introduce additional resistance into the power supply line.

In one embodiment, the system is configured such that the high levels of current are those higher than a predefined threshold, and the low levels are below this threshold. This threshold-based approach allows the system to reliably distinguish between the periods when the image sensor is actively capturing images and when it is idle. The predefined current threshold can be adjusted based on the characteristics of the image sensor. In some implementations, the threshold could be adjusted based on, for example, environmental factors, such as changes in temperature or supply voltage.

The threshold may be set during the design phase based on measurements of the image sensor's typical current draw during active and idle phases. In one example, the threshold could be set just above the sensor's idle current level to ensure that even small increases in current due to sensor activation are detected. Alternatively, the system could be designed to calibrate the threshold during operation, continuously monitoring the current and adjusting the threshold as needed to adapt to varying operational conditions.

The threshold could also be set based on a statistical analysis of the current fluctuations over time, allowing the system to differentiate between random noise and actual changes in current caused by sensor activity.

As described above, the presently disclosed system continuously detects periodically alternating high and low levels of the measured current drawn by or supplied to the image sensor. These current fluctuations are used to infer the operational state of the image sensor, specifically to identify periods during which the sensor is actively capturing images. The control circuitry uses this information to alternate the illumination source between an on state and an off state, with the illumination frequency matching the switching frequency of the detected high and low current levels. This ensures that the illumination source is synchronized with the image sensor's activity and conserves power by only being active during relevant periods.

However, it is possible that the detected current peaks may not perfectly correspond to the actual exposure periods of the image sensor. In some configurations, other processes within the image sensor, such as image readout or data transfer, may also cause fluctuations in the current that are unrelated to the image sensor's exposure state. For instance, after the image sensor has captured an image, it may still draw additional current to transfer the image data to the processing unit or memory.

To address this potential discrepancy, the system may be configured to match the enable signals for controlling the illumination source to a known timing relationship between the actual exposure of the image sensor and the detected current peaks. This timing relationship can be pre-determined based on the known behavior of the image sensor and stored in the control circuitry. By incorporating this timing adjustment, the system can introduce a slight time offset or delay between the detected current peak and the activation of the illumination source, ensuring that the illumination is aligned precisely with the exposure period, even if the current peak occurs before or after the actual exposure.

In some embodiments, the system may use a model of the image sensor's current consumption profile, which takes into account not only the exposure period but also other known timing of operations such as readout and idle states. This model allows the control circuitry to differentiate between current peaks caused by exposure and those caused by other sensor activities. By applying this model when configuring the timing of the enable signal, the system can generate an enable signal for the illumination source that more accurately reflects the true exposure time of the sensor.

The image sensor may be configured to capture images at a rate of at least 10 frames per second, and preferably at least 30 frames per second. This frame rate corresponds to an illumination frequency of at least 10 Hz, which ensures that the illumination source is toggled on and off in sync with the image sensor's exposure period. The ability to operate at higher frame rates is useful for applications requiring real-time video capture. Higher frame rates, such as 60 frames per second or more, could also be supported in some embodiments, depending on the capabilities of the image sensor and the system's processing power. The image sensor may use either a global shutter or a rolling shutter for capturing images. A global shutter captures the entire image frame at once. In this method, every pixel on the image sensor is exposed to light simultaneously and then the entire frame is read out at the same time. This means that the entire scene is captured in a single instant. A rolling shutter captures the image frame progressively, line by line, from top to bottom (or sometimes side to side). In this method, each row of pixels on the sensor is exposed at slightly different times, and the sensor reads the image line by line as the scene is exposed. For the case of a global shutter, the frame rate can be directly converted to the exposure rate. For the case of a rolling shutter, the illumination source may be controlled to alternate between an on state and an off state corresponding to the exposure of the full image, i.e. each on state may include a number of sub-exposures of a number of lines. For a rolling shutter there may still be a distinct idle period between each image. Whether a global shutter or a rolling shutter is used, the image sensor may be configured to capture images at a suitable rate, wherein the illumination source may be controlled accordingly to alternate between an on state and an off state.

The measured current may have distinct high and low current levels correlating with an active and an inactive state of the image sensor. In the context of the present disclosure, the active state of the image sensor may refer to periods when the sensor is performing its primary function of capturing or processing an image. This typically includes the exposure period, during which the sensor's pixels are exposed to light and accumulating image data, and may also include other image-related activities such as readout, where the captured data is transferred from the sensor's pixels to the processing circuitry. During the active state, it has been realized that the image sensor draws a higher current. The inactive state may refer to periods when the image sensor is not actively capturing or processing an image. This could be a brief idle period between exposures, where the sensor may be in a low-power mode or drawing minimal current, waiting for the next image capture event. It has been realized that the current drawn by the sensor in the inactive state is significantly reduced compared to the active state.

The measurement and control circuitry may be configured to compare the measured current against a predefined threshold to determine whether the image sensor is in the active or inactive state. The predefined threshold may thereby represent a current level that distinguishes between the sensor's operational states, with current levels above the threshold indicating an active state and current levels below the threshold indicating an inactive state. The predefined threshold may be set based on the known behavior of the image sensor, particularly its current consumption during various operational phases, such as exposure, readout, or idle periods. By monitoring the current levels continuously and comparing them against this threshold, the system can accurately determine whether the sensor is in the active or inactive state.

The predefined threshold may be chosen, for example, based on a combination of empirical testing and sensor specifications. In some embodiments, the threshold could be a fixed value based on the typical current drawn during the sensor's active state. In more advanced embodiments, the threshold could be dynamically adjusted based on operating conditions, such as temperature or supply voltage variations, which can affect the sensor's current consumption. The control circuitry may include algorithms that automatically adjust the threshold.

In one embodiment the measurement and control circuitry is configured to determine, based on the detected level or change in the measured current, a time period during which the image sensor performs exposure. The `time period' may thus refer to the duration when the sensor's pixels are actively exposed to light. The system may continuously monitor the current drawn by the sensor, detecting a rise in current above a predefined threshold to mark the start of the exposure period. When the current falls below this threshold, the exposure period ends. This current-based detection allows the system to identify the exposure time.

The measurement and control circuitry may be configured to convert the change in the measured current to the time period during which the image sensor performs exposure according to a predetermined relationship and/or function. This approach relies on prior knowledge of the sensor's current consumption profile, where the relationship between the current drawn and the exposure period is established either through empirical testing or sensor specifications. For instance, the control circuitry could use a simple linear function or a more complex formula that correlates the rise and fall in current levels with the start and end of the exposure phase. This predefined relationship allows the system to estimate the exposure time accurately without needing a direct exposure signal.

Alternatively, the measurement and control circuitry may be configured to determine the time period during which the image sensor performs exposure comprises using a model of the image sensor. The model may account for various operational factors of the sensor, such as exposure delay, readout time, and current consumption behaviour under different conditions. The model can be pre-calibrated based on detailed analysis of the sensor's performance, incorporating not just the exposure phase but also other stages like data readout or power transitions. By using this model, the control circuitry can more precisely synchronize the illumination source with the actual exposure period, even compensating for complex sensor behaviours that go beyond simple current fluctuations.

The present disclosure further relates a method of controlling an illumination source for illuminating a scene during image sensor exposures, the method comprising:
configuring an image sensor to capture images of a scene at a periodic rate;
continuously measuring a current to/from the image sensor;
continuously detecting periodically alternating high and low levels of the measured current;
controlling the illumination source to alternate between an on state and an off state with an illumination frequency equal to a switching frequency of the detected periodically alternating high and low levels of the measured current such that the illumination source is in the on state during exposure of the image sensor.

As part of the method, the current to or from the image sensor is continuously measured. This measurement may be carried out by a variety of sensing mechanisms, such as a shunt resistor, which provides a reliable means of detecting the current drawn by the sensor. Alternatively, other current-sensing technologies, such as Hall effect sensors or current transformers, may be employed depending on the specific configuration of the system.

Once the current is measured, the method further includes continuously detecting periodically alternating high and low levels of the measured current. These high and low current levels are indicative of the operational states of the image sensor-wherein the high levels correspond to periods of increased activity, such as the sensor exposure period, and the low levels correspond to periods when the sensor is idle or performing other non-exposure-related functions. The detection process may involve comparing the measured current levels against predefined thresholds. These thresholds can be set based on the known current consumption profile of the image sensor.

The method further includes controlling the illumination source to alternate between an on state and an off state, where the illumination frequency is equal to a switching frequency of the detected periodically alternating high and low levels of the measured current. This ensures that the illumination source, such as an infrared (IR) LED, is in the on state during exposure of the image sensor, thereby providing sufficient illumination to capture high-quality images in low-light environments. The control of the illumination source may be achieved through the generation of an enable signal, which is sent to the illumination source based on the detected current levels.

In some embodiments, the timing of the on and off states of the illumination source may be adjusted to account for any delays or time offsets between the measured current peaks and the actual exposure time of the image sensor. For example, if there is a known delay between the current peak and the start of the exposure period, the enable signal can be configured to shift the illumination activation by a predetermined time offset to ensure that the illumination aligns with the exposure. This timing adjustment can be performed using a variety of techniques, including the use of timers, counters, or delay circuitry.

Fig. 4 shows a flow chart of a method according to an embodiment of the presently disclosed method of controlling an illumination source for illuminating a scene during image sensor exposures (300).The method comprises the steps of: configuring an image sensor to capture images of a scene at a periodic rate (301); continuously measuring a current to/from the image sensor (302); continuously detecting periodically alternating high and low levels of the measured current (303); and controlling the illumination source to alternate between an on state and an off state with an illumination frequency equal to a switching frequency of the detected periodically alternating high and low levels of the measured current such that the illumination source is in the on state during exposure of the image sensor (304).

In one embodiment of the present disclosure, the measurement and control circuitry may include one or more processing units configured to execute instructions stored in memory for controlling the illumination source based on the measured current levels.

The term "processing circuitry" as used herein refers to any electronic circuit or combination of circuits that perform data processing functions. This may include, but is not limited to, microprocessors, microcontrollers, digital signal processors (DSPs), application-specific integrated circuits (ASICs), field-programmable gate arrays (FPGAs), or any other type of integrated circuit capable of executing instructions or processing data. The processing units may responsible for executing the control logic, including continuously analyzing the measured current, detecting periodically alternating high and low current levels, and generating an enable signal for the illumination source.

The measurement and control circuitry may also include memory components, such as random access memory (RAM), read-only memory (ROM), or flash memory.

In some implementations, the measurement and control circuitry may include analog-to-digital converters (ADCs) to digitize the current measurement from analog sensing components, such as shunt resistors or Hall effect sensors. The ADCs may convert the measured current into a digital signal, which is processed by the processing unit to detect the high and low current levels.

The processing circuitry may be configured to execute software, firmware, or hardware instructions to perform specific tasks. These tasks can include, but are not limited to, arithmetic operations, logical operations, data manipulation, control functions, communication protocols, and any other operations necessary to carry out the functions of the invention.

## Claims

1. An image-capturing system (100) comprising:
an image sensor (101) configured to capture images of a scene at a periodic rate;
an illumination source (102) for illuminating the scene;
measurement and control circuitry (108) configured to:
continuously measure a current (200) to/from the image sensor (101);
continuously detect periodically alternating high and low levels (202; 203) of the measured current (200); and
control the illumination source (102) to alternate between an on state and an off state with an illumination frequency equal to a switching frequency of the detected periodically alternating high and low levels (202; 203) of the measured current (200) such that the illumination source (102) is in the on state during exposure of the image sensor (101).

2. The image-capturing system (100) according to claim 1, wherein at least the image sensor (101) and the measurement and control circuitry (108) are disposed in different units (106; 110), such as on different printed circuit boards.

3. The image-capturing system (100) according to any one of the preceding claims, wherein the image sensor (101) and the illumination source (102) are disposed in different units (106; 107).

4. The image-capturing system (100) according to any one of the preceding claims, wherein the measurement and control circuitry (108) is configured to generate an enable signal (204a; 204b) for controlling the illumination source (102) to illuminate and not illuminate the scene.

5. The image-capturing system (100) according to any one of the preceding claims, wherein the measurement and control circuitry (108) comprises measurement circuitry (104), such as at least one shunt resistor, for measuring the current, and control circuitry (105), such as a comparator, for generating an enable signal (204a; 204b) for controlling the illumination source (102) to illuminate and not illuminate the scene.

6. The image-capturing system (100) according to any one of the preceding claims, wherein the high levels (202) are current levels higher than a predefined current threshold (201) and the low levels (203) are current levels lower than the predefined current threshold (201).

7. The image-capturing system (100) according to any one of the preceding claims, wherein the image sensor (101) is configured to capture images of the scene at a rate of at least 10 image frames per second, preferably at least 30 image frames per second, corresponding to an illumination frequency of at least 10 Hz.

8. The image-capturing system (100) according to any one of the preceding claims, wherein the measured current (202) has distinct high and low current levels (202; 203) correlating with an active and an inactive state of the image sensor.

9. The image-capturing system (100) according to claim 8, wherein the measurement and control circuitry (108) is configured to compare the measured current (200) against a predefined threshold (201) to determine whether the image sensor is in the active or inactive state.

10. The image-capturing system (100) according to any one of the preceding claims, wherein the measurement and control circuitry (108) is configured to determine, based on the detected level or change in the measured current (202), a time period during which the image sensor (101) performs exposure.

11. The image-capturing system (100) according to claim 10, wherein the measurement and control circuitry (108) is configured to convert the change in the measured current (202) to the time period during which the image sensor (101) performs exposure according to a predetermined relationship and/or function.

12. The image-capturing system (100) according to any one of claims 10 to 11, wherein the measurement and control circuitry (108) is configured to determine the time period during which the image sensor (101) performs exposure comprises using a model of the image sensor.

13. The image-capturing system (100) according to any one of the preceding claims, wherein the measurement and control circuitry (108) is configured to control the illumination source (102) to alternate between the on state and the off state with a predetermined time offset relative to a distinct change in the measured current (200).

14. The image-capturing system (100) according to any one of the preceding claims, wherein the illumination source is an infrared illumination source, such as an infrared illumination light-emitting diode.

15. A method (300) of controlling an illumination source for illuminating a scene during image sensor exposures, the method comprising:
configuring (301) an image sensor to capture images of a scene at a periodic rate;
continuously measuring (302) a current to/from the image sensor;
continuously detecting (303) periodically alternating high and low levels of the measured current; and
controlling (304) the illumination source to alternate between an on state and an off state with an illumination frequency equal to a switching frequency of the detected periodically alternating high and low levels of the measured current such that the illumination source is in the on state during exposure of the image sensor.
